**Europäisches Patentamt**

**European Patent Office**

**Office européen des brevets**

(19)

(11) Numéro de publication: **0 124 445**
**B1**

(12) **FASCICULE DE BREVET EUROPEEN**

(45) Date de publication du fascicule du brevet:
**19.11.87**

(51) Int. Cl.⁴: **A 63 B 69/16,** B 25 H 1/00

(21) Numéro de dépôt: **84400870.6**

(22) Date de dépôt: **27.04.84**

(54) **Dispositif-support de cycle à usage multiple, notamment pour entretien, réglage et entraînement domestique.**

(30) Priorité: **02.05.83 FR 8307267**

(43) Date de publication de la demande:
**07.11.84 Bulletin 84/45**

(45) Mention de la délivrance du brevet:
**19.11.87 Bulletin 87/47**

(84) Etats contractants désignés:
**BE DE GB IT LU NL SE**

(56) Documents cités:
**CH - A - 218 248**
**DE - A - 2 551 526**
**FR - A - 1 201 707**
**FR - A - 2 380 178**
**FR - A - 2 421 788**

(73) Titulaire: **Legrand, Gilles, Bignoux, F-86800 Saint Julien l'Ars (FR)**

(72) Inventeur: **Legrand, Gilles, Bignoux, F-86800 Saint Julien l'Ars (FR)**

(74) Mandataire: **Letheule, Jacqueline, 5 Rue José-Maria de Hérédia, F-75007 Paris (FR)**

## Description

L'invention concerne un dispositif support de cicle, notamment de bicyclette, qui puisse être utilisé aussibien pour élever le véhicule seul afin d'y effectuer l'entratien général ou des réparations, que pour permettre au cycliste de prendre place sur son véhicule afin de réaliser les réglages (notamment de dérailleur) ou même de pratiquer un entraînement du genre dit «home-training».

Le dispositif selon l'invention présente donc l'originalité d'offrir en un seul appareil l'ensemble des service utiles au propriétaire d'un cycle.

On connait les supports de suspension de cycles utilisés comme présentoirs. Ainsi, le FR-A-2 380 178 du 11 Février 1977 concerne-t-il un support pour suspendre un véhicule, en particulier une bicyclette. Ce support est caractérisé en ce qu'il comporte un pied télescopique en hauteur surmonté de moyens de maintien du cadre de la bicyclette. De même le FR-A-2 421 788 du 4 Avril 1978 concerne un dispositif de suspension et de préhension pour véhicule, en particulier pour bicyclette. Ce dispositif présente l'amélioration, par rapport au brevet précédemment cité, de comporter des moyens permettant le positionnement du cadre de la bicyclette dans tous les plans de l'espace avec une préhension ferme. L'une et l'autre de ces inventions se limitent à décrire une sorte de présentoir pour bicyclettes sans qu'il soit possible de manière évidente, de les adapter pour d'autres utilisations. Ils sont particulièrement incapables de supporter de manière stable, le poids d'une bicyclette chargée d'un cycliste.

On connaît également de FR-A-2 314 309 du 16 Juin 1977 un dispositif d'entraînement à la pratique du cyclisme. Ce dispositif permet de placer une bicyclette, dont on a préalablement ôté la roue avant, sur des rouleaux fous, l'ensemble formant une sorte de «home-trainer». Cette invention présente le premier inconvénient d'exiger le démontage de la bicyclette et laisse craindre une usure et und détérioration de la fourche avant (particulièrement dans sa partie inférieure). Ce dispositif ne prévient pas, d'autre part, la désarticulation du cycle en deux parties autour du tube de direction qui pourrait amener des déformations de la fourche avant ou du cadre. Enfin ce dispositif n'est pas adaptable de manière évidente pour former un présentoir permettant d'élever le véhicule complet à une hauteur de travail désirée.

La présente invention concerne un dispositif-support de cycles, pour leur fixation en position route, du type constitué d'un socle en appui sur le sol, d'un support de réception du cycle relié au socle par des organes de liaison réglables en hauteur, dispositif caractérisé en ce que le socle est constitué d'un cadre résistant, définissant un polygone de sustentation sur le sol maintenant le cycle en position stable lorsque le cycliste est sur son véhicule, les organes de liaison étant réglables entre au moins deux positions, l'une correspondant au contact des roues du cycle avec le socle, l'autre à la libération desdites roues.

Selon une caractéristique avantageuse de l'invention, les organes de liaison sont des sortes de pantographes constitués de biellettes articulées superposées formant des parallélogrammes déformables. La fixation du cadre du cycle s'effectue à l'aide d'un bras sensiblement parallèle au montant inférieur avant du cadre du cycle, pourvu de moyens d'appui réglables pour assurer l'horizontalité du cycle, et muni d'un système de verrouillage rapide. La conversion du dispositif en home-trainer est assurée par l'existence de logements pratiqués dans le socle, destinés à recevoir au moins un rouleau fou ou freiné.

D'autres caractéristiques et avantages ressortiront de la description ci-après et des dessins annexés dans lesquels:

— la fig. 1 est une vue de face présentant le dispositif-support chargé d'une bicyclette,

— la fig. 2 présente une vue en perspective du socle du dispositif et des rouleaux d'entraînement dessinés en éclaté,

— la fig. 3 est une vue du en coupe de système de verouillage de cadre de bicyclette;

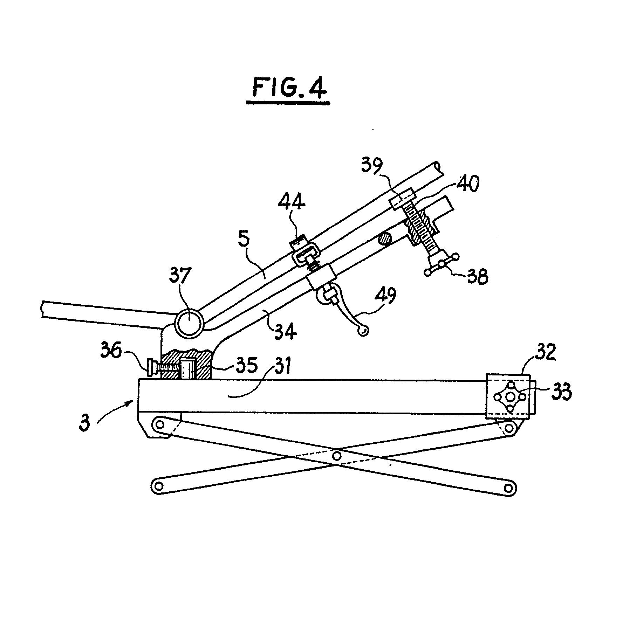

— la fig. 4 est une vue de face du support de réception et des moyens de fixation du cadre de bicyclette.

Le dispositif décrit ci-dessous et constituant une application de l'invention, comprend un socle 1 surmonté d'organes de liaison 2, d'un support de réception 3 et de moyens de fixation 4.

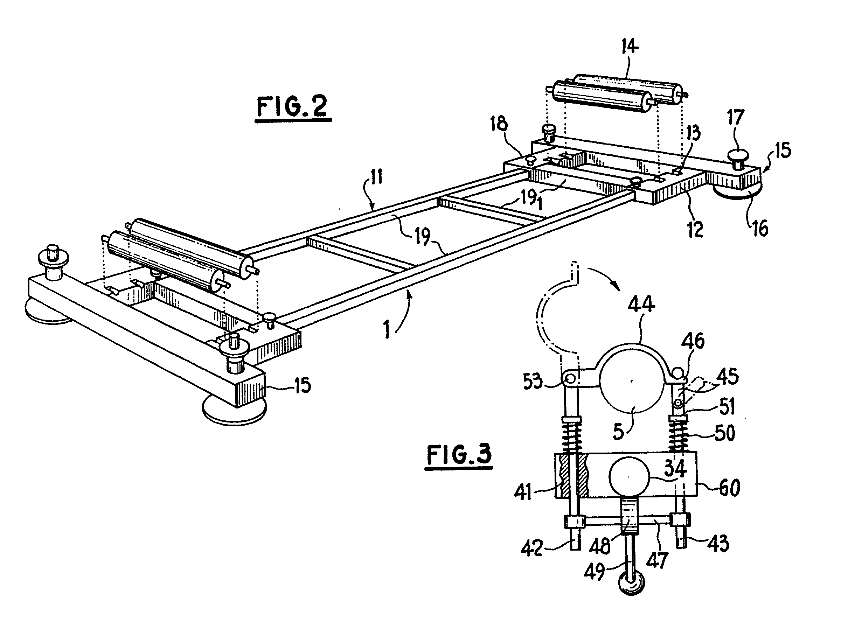

Le socle 1 présenté en fig. 2 se compose d'un cadre 11 formé d'au moins un longeron 19 et de traverses $19_1$ prolongé à chacune de ses extrémités par des portées 12 pourvues de logements 13, semi-cylindriques, constituant des paliers pour les axes de rouleaux 14. En bout de socle, sont fixée deux traverses 15 sur lesquelles sont montés quatre pieds 16, montés sur tiges filetées et reglables en hauteur au moyen d'écrous noyés et de blocage 17.

Selon un moyen de réalisation de l'invention, les longerons parallèles 19 du cadre 11 s'emboîtent dans les portées 12 et sont immobilisées grâce aux vis de blocage 18, de telle manière à régler la distance séparant les deux jeux de rouleaux 14 situés à chacune des extrémités du socle.

Selon un autre mode de réalisation de l'invention, les deux traverses 15 situées aux deux extrémités du cadre, constituant le socle, peuvent être amovibles de telle manière que les portées 12 comportant déjà les rouleaux d'entraînement pussent y être emmanchées et fixées ou retirées et stockées à part.

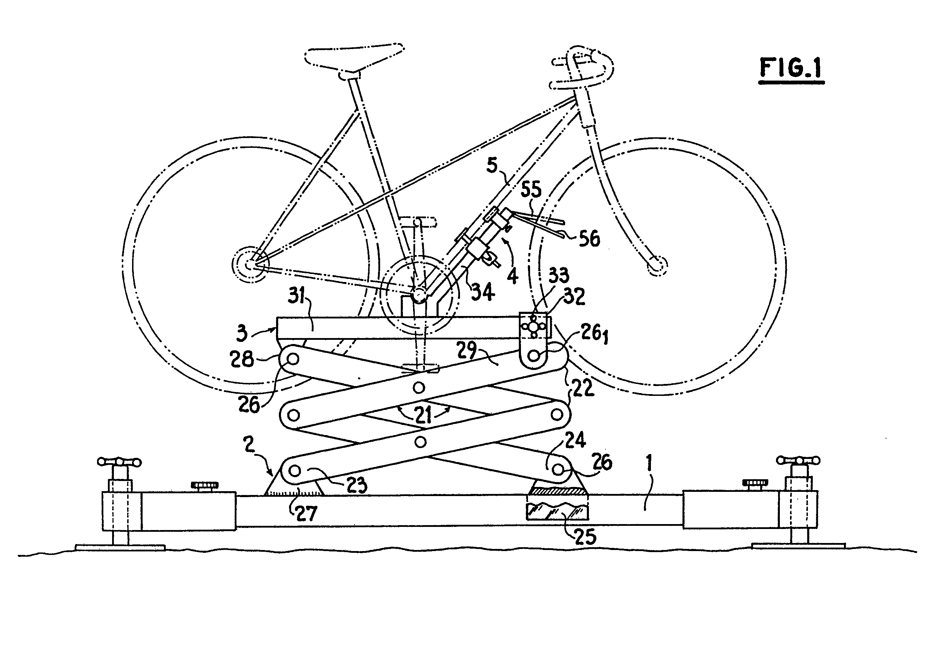

Les organes de liaison sont constitués d'une paire de pantographes 21 dont l'un des éléments est montré en fig. 1, chaque pantographe 21 étant constitué de biellettes 22 articulées formant des parallèlogrammes déformables. Des deux branches inférieures de chaque pantographe, l'une 23, est articulée grâce à un axe sur le bloc 27, lié rigidement au socle, et l'autre, 24, est liée à un étrier 25 au moyen d'un axe d'articulation 26. L'étrier 25 coulisse en déplacement alternatif le long d'un longeron 19 du cadre 11.

Des deux branches terminant chaque pantographe dans sa partie supérieure, l'une, 28, est articulée grâce à un axe 26 directement sur la semelle 31 du support de réception 3, et l'autre, 29, est liée par un axe $26_1$ à un manchon 32 coulissant sur la semelle 31 du support de réception 3, et bloqué sur cette même semelle 31 au moyen d'une vis à oreilles 33. L'élévation du vélo et de son support aura pour conséquence le déplacement vers la gauche de la fig. 1 de l'étrier 25, et du manchon 32. L'utilisateur immobilisera le vélo à la hauteur désirée en serrant la vis à oreilles 33.

Le support de réception 3 du vélo est constitué de la semelle 31 sur laquelle est monté le bras de fixation 24. La solidarisation du bras sur la semelle s'effectue au moyen des vis 36 venant serrer le tenon 35 faisant corps avec la semelle 31. Ce bras est formé de manière à constituer à sa base un berceau servant de siège au carter du pédalier 37 de la bicyclette. A son extrémité supérieur, le bras 34 est percé d'un trou fileté recevant la tige 40 de la tête d'appui 39 dont la distance par rapport au bras est réglable en vissant ou dévissant la poignée 38 solidaire de la tige 40. La tête d'appui 39 est montée folle sur la tige 40, et sa forme en arc de cercle de faible rayon lui permet de servir de siège au montant inférieur avant du cadre de bicyclette. Entre la tête d'appui 39 et le siège du carter de pédalier 37 est situé sur le bras le système de fixation et de verrouillage 4. Selon le mode de réalisation décrit, le moyen de fixation est constitué d'un bloc 60 réglable sur le bras 34, ce bloc étant traversé de deux orifices 41 symétriques par rapport à l'axe central dudit bras, dans lesquels coulissent librement deux tiges 42–43. A l'extrémité de la tige 42 est articulée, autour de l'axe de rotation 53, la mâchoire 44 destinée à enserrer le montant inférieur avant du cadre. La tige 43 est terminée par un étrier 45 venant verrouiller le mâchoire 44 sur son extrémité formant bec 46. A l'autre extrémité des tiges 42 et 43, sous le bras de fixation 34, une entretoise 47 est liée rigidement aux deux tiges 42 et 43. Une came 48, en rotation libre autour de l'entretoise 47, prolongée d'un levier de manœuvre 49, présente d'une part, un profil de verrouillage, et, d'autre part, une rampe de déverrouillage.

Le profil de verrouillage est ainsi conçu que lorsqu'on actionne le levier 49 pour immobiliser le cadre de bicyclette 5, la mâchoire 44 comprime et applique le montant 5 sur sa largeur de prise, ledit montant étant en appui d'autre part sur le bras dans le siège du carter de pédalier 37 et sur la tête d'appui 39. La position d'immobilisation est stable grâce à la pression de la came 48 sur le bras 34 et l'élasticité du montant 5 du cadre de bicyclette et de l'ensemble du système de verrouillage.

Selon un mode de réalisation avantageux, des ressorts de rappel 50 sont montés sur chacune des tiges 42 et 43 entre le bras 34 et des circlips 51. Cec ressorts 50 permettent le déblocage de la mâchoire 44 du montant 5 de la bicyclette lorsque l'utilisateur actionne le levier de manœuvre 49, de manière à amener la rampe de déverrouillage de la came 48 en contact avec le bloc 60.

Lors de l'utilisation du dispositif selon l'invention pour lentretien d'une bicyclette, on disposera le véhicule sur le bras 34 de telle manière à ce que son carter de pédalier s'emboîte dans le siège situé à la base du bras 34, et l'on vissera ou dévissera la poignée 38 de manière à amener suivant l'angle d'ouverture du cadre, la tête d'appui 39 en contact avec le montant 5 du cadre du vélo, celui-ci étant maintenu en position horizontale. Le cadre du vélo sera immobilisé sur le bras 34 en actionnant le levier de manœuvre 49.

Pour modifier en hauteur la position du vélo fixé sur le dispositif, on desserre la poignée 33 du manchon 32 en prise sur la semelle 31 du support de réception 3, et l'on accompagne l'ensemble dans son déplacement vertical. Les étriers 25 se déplacent alors sur les longerons 19 du cadre 11, et le manchon 32 le long de la semelle 31. Lorsqu'on a obtenu la hauteur désirée, on immobilise l'ensemble en solidarisant le manchon 32 avec la semelle 31 au moyen de la poignée 33.

Pour l'utilisation du dispositif comme «home-trainer», on dispose les rouleaux d'entraînement 14 dans les logements semi-cylindriques 13 des portées 12 et on abaisse le vélo fixé sur le bras 34 selon la procédure décrite ci-dessus, et en ajustant éventuellement l'horizontalité du cycle grâce à la poignée 38 de la tête d'appui 39.

Selon une autre réalisation de l'invention, on emmanche les portées amovibles 12 sur le cadre 11, ces portées comportant déjà les rouleaux d'entraînement 14.

L'horizontalité et la stabilité générale du cadre peuvent être réglées en faisant varier la hauteur des pieds 16 bloqués par les écrous 17.

Lorsque la bicyclette est à une hauteur suffisante pour que les roues ne soient plus en contact avec le sol, le cycliste peut monter s'asseoir sur la selle en position de route, et effecteur ses réglages du dérailleur ou vérifier la bonne position du guidon ou de la selle.

Lorsque le dispositif est aménagé en «home-trainer», et la bicyclette en contact par ses pneus avec les rouleaux d'entraînement 14, le cycliste peut s'entraîner à la pratique du vélo, ou bien tester «in vivo» les réglages qu'il a effectués sur son engin.

Dans le cas de l'utilisation du dispositif en «home-trainer», il est avantageux de prévoir un dispositif de freinage des rouleaux, qui permet de moduler l'intensité de l'effort à transmettre aux pédales pour faire tourner la roue arrière. L'ensemble du dispositif peut être alors complété de tous accessoires permettant de lire la vitesse de déplacement, la durée du déplacement simulé, l'effort fourni, etc . . .

De la description ci-dessus ressortent les avantages de l'invention par rapport aux réalisations antérieures. Sa convertibilité permet de l'utiliser soit comme présentoir, soit comme support, soit comme «home-trainer». Cette capacité d'applications multiples et ces différents moyens de réalisation en font un dispositif nouveau particulièrement avantageux pour le cycliste.

Bien entendu, l'invention ne'est pas limitée aux modes de réalisation ci-dessus décrites. C'est ainsi que l'on pourra utiliser d'autres moyens de réglage en hauteur ou d'autres organes de fixation du cycle qui seront considérés comme des équivalents techniques. Les pantographes peuvent être remplacés par exemple, par des colonnes télescopiques, des vérins mécaniques ou autres, et le dispositif à mâchoire 44 par des sangles, des collets ou similaires. Le cadre 11 peut être constitué d'un seul longeron 19 central, et être prolongé à une seule de ses extrémités par un système de portée 12 recevant au moins un rouleau 14. L'autre extrémité est alors pourvue d'un petit support destiné à recevoir la roue avant.

Avantageusement, le bras 34 peut être muni à son extrémité supérieure de deux baguettes longues 55, 56, qui constituent une sorte de fourchette à l'intérieur de laquelle est glissée la roue avant du cycle, et empêchent celle-ci de tourner autour de l'axe de direction du cycle.

## Revendications

1. Dispositif support de cycle, pour leur fixation en position route, du type constitué d'un socle (1) en appui sur le sol, d'un support de réception (3) du cycle relié au socle (1) par des organes de liaison (2), réglables en hauteur, dispositif caractérisé en ce que le socle (1) est constitué d'une ossature résistante (11), définissant un polygone de sustentation sur le sol maintenant le cycle en position stable lorsque le cyclist est sur son véhicule, les organes de liaison (2) étant réglables entre au moins deux position, l'une correspondant au contact des roues du cylce avec au moins une partie du socle (1), l'autre au retrait desdites roues par rapport au socle susdit.

2. Dispositif selon la revendication 1, caractérisé en ce que l'ossature (11) comprend au moins u longeron (19), dont au moins l'une des deux extrémités est pourvue de paliers (12) pour supporter les axes d'au moins un rouleau (14) fou et/ou freiné, permettant au dispositif d'être converti en «home-trainer».

3. Dispositif selon l'une quelconque des revendications 1 et 2, caractérisé en ce que le socle comprend des pieds (16) de hauteur réglable.

4. Dispositif selon la revendication 1, caractérisé en ce que les organes de liaison (2) sont constitués d'une paire de pantographes (21) parallèles et montés chacun sur un des longerons (19) du cadre (11), chaque pantographe (21) étant constitué de biellettes (22) articulées, superposées, formant des parallèlogrammes déformables et étant reliées dans leur partie inférieure au socle (1) et dans leur partie supérieure au support de réception (3) du cycle.

5. Dispositif selon la revendication 4, selon laquelle chaque pantographe est relié par sa partie supérieure au support de réception (3) du cycle et par sa partie inférieure au socle (1), caractérisé en ce que l'une des biellettes inférieures (23) est reliée par une articulation fixe au socle, tandis que l'autre (24) est articulée sur un étrier (25) coulissant en déplacement alternatif sur le cadre (11) et en ce que l'une des biellettes supérieures (28) est reliée par une articulation fixe sur la semelle (31) du support de réception (3), l'autre (29) étant articulée sur un manchon (32) coulissant sur ladite semelle (31) et étant pourvue d'un moyen de blocage par la poignée (33).

6. Dispositif selon la revendication 1, caractérisé en ce que les organes de liaison (2) sont constitués par au moins une colonne verticale solidaire du socle (1), chaque colonne coulissant dans un tube solidaire du support de réception (3), sur lequel elle se bloque au moyen d'une vis de blocage.

7. Dispositif selon l'une quelconque des revendications 1 à 6, caractérisé en ce que le support de réception (3) comprend un berceau servant de siège au carger (37) du pédalier de la bicyclette, ce berceau étant prolongé par un bras (34) s'étendant dans un plan sensiblement parallèle au montant oblique inférieur avant (5) du cadre de la bicyclette et étant pourvue à son extrémité supérieure d'une tête d'appui (39) (réglable suivant l'angle d'ouverture du cadre) destinée à recevoir une portion du montant (5) dudit cadre.

8. Dispositif selon la revendication 7, caractérisé en ce que le support de réception (3) comprend un bloc (60) de fixation réglable sur le bras (34), ce bloc étant traversé de deux orifices (41) symétriques par rapport à l'axe central du bras (34), dans lesquels coulissent librement deux tiges (42, 43), l'une (42) pourvue d'une mâchoire articulée (44) prolongée d'un bec de verrouillage (46), l'autre (43) d'un étrier (45), destiné à recevoir ledit bec (46), les extrémités opposées desdites tiges étant pourvues d'un système de verrouillage.

9. Dispositif selon la revendication 8, caractérisé en ce que le système de verrouillage set constitué d'une entretoise (47) reliant les deux tiges (42–43) sur laquelle est fixée une came (48) prolongée par un levier de manœuvre (49), la came (48) comportant d'une part, un profil de verrouillage, d'autre part, une rampe de déverrouillage, de telle sorte que, selon le profil utilisé, le système de verrouillage est bloqué en position de fermeture, ou déverrouillé.

10. Dispositif selon l'une quelconque des revendications 8 à 9, caractérisé en ce que des ressorts de rappel (50) entourent les deux tiges (42–43), constituant le moyen de verrouillage.

11. Dispositif selon l'une quelconque des revendications 2 à 10, caratérisé en ce que les paliers (12) des rouleaux de «home-trainers» sont amovibles.

## Patentansprüche

1. Tragvorrichtung für Fahrräder in Fahrstellung, bestehend aus einem Sockel (1), der auf dem Boden aufliegt, einem Halter zur Aufnahme (3) des Fahrrades, der mit dem Sockel (1) über Verbindungsteile (2) verbunden ist, die in der Höhe verstellt werden können, dadurch gekennzeichnet, dass der Sockel (1) aus einem widerstandsfähigen Rahmen (11) besteht, der auf dem Boden ein Vieleck zur Stützung definiert und somit das Fahrrad stabilisiert, wenn der Fahrradfahrer darauf sitzt; die Verbindungsteile (2) sind in mindestens zwei Positionen einstellbar, wobei die eine dem Kontakt der Räder des Fahrrades mit mindestens einem Teil des Sockels (1) entspricht und die andere dem Rückzug dieser Räder im Verhältnis zu diesem Sockel.

2. Vorrichtung gemäss Anspruch 1, gekennzeichnet dadurch, dass der Rahmen (11) mindestens einen Längsträger (19) enthält, wovon mindestens ein Ende mit Lagerflanschen (12) ausgerüstet ist, um die Achsen von mindestens einer Freilauf- oder Bremsrolle (14) zu tragen, wodurch die Vorrichtung in einen «Home-Trainer» umgewandelt werden kann.

3. Vorrichtung gemäss einem der Ansprüche 1 und 2, gekennzeichnet dadurch, dass der Sockel Füsse (16) mit einstellbarer Höhe besitzt.

4. Vorrichtung gemäss Anspruch 1, gekennzeichnet dadurch, dass die Verbindungsteile (2) aus einem Paar parallelen Pantographen (21) besteht, die jeweils auf einem Längsträger (19) des Rahmens (11) montiert sind; jeder Pantograph (21) besteht aus gelenkigen Schubstangen (22), die übereinander liegen und variable Parallelogramme bilden und an ihrem unteren Teil mit dem Sockel (1) und am oberen Teil mit dem Halter zur Aufnahme (3) des Fahrrades verbunden sind.

5. Vorrichtung gemäss Anspruch 4, gemäss dem jeder Pantograph am oberen Teil mit dem Halter zur Aufnahme (3) des Fahrrades und am unteren Teil mit dem Sockel (1) verbunden ist, gekennzeichnet dadurch, dass eine der unteren Schubstangen (23) über ein feststehendes Gelenk mit dem Sockel verbunden ist, wohingegen die andere Schubstange (24) gelenkig in einem Sattel (25) gelagert ist, der in einer Wechselbewegung auf dem Rahmen (11) gleitet, und dadurch, dass eine der oberen Schubstangen (28) über ein feststehendes Gelenk mit der Sohle (31) des Halters zur Aufnahme (3) des Fahrrades verbunden ist und die andere Schubstange (29) gelenkig in einer Führung (32) gelagert ist, die auf dieser Sohle (31) gleitet, und mit einer Verriegelung durch den Griff (33) versehen ist.

6. Vorrichtung gemäss Anspruch 1, gekennzeichnet, dass die Verbindungsteile (2) aus mindestens einer feststehenden Säule besteht, die fest mit dem Sockel (1) verbunden ist, wobei jede Säule in einem Rohr gleitet, das fest mit dem Halter zur Aufnahme (3) verbunden ist, auf dem sie mit einer Arretierschraube blockiert werden kann.

7. Vorrichtung gemäss einem der Ansprüche 1 bis 6, gekennzeichnet dadurch, dass der Halter zur Aufnahme (3) einen Schwingrahmen enthält, der als Auflage für das Pedalgehäuse (37) des Fahrrades dient; dieser Schwingrahmen ist durch einen Arm (34) in einer zur unteren, schrägen Strebe (5) vorn am Rahmen des Fahrrades parrallelen Ebene verlängert und an seinem oberen Ende mit einem Auflagekopf (39) versehen (entprechend dem Öffnungswinkel des Rahmens einstellbar), der zur Aufnahme eines Teils der Strebe (5) dieses Rahmens dient.

8. Vorrichtung gemäss Anspruch 7, dadurch gekennzeichnet, dass der Halter zur Aufnahme (3) auf dem Arm (34) einen einstellbaren Block (60) besitzt, den zwei zur mittleren Achse des Armes (34) symetrische Öffnungen (41) durchqueren, in denen zwei Stäbe (42, 43) frei gleiten; der eine Stab (42) ist mit einem Gelenkbacken (44) versehen, der durch eine Verriegelungszunge (46) verlängert ist, der andere Stab (43) ist mit einem Sattel (45) zur Aufnahme dieser Zunge (46) versehen, wobei die beiden gegenüberliegenden Enden dieser Stäbe mit einem Verriegelungssystem versehen sind.

9. Vorrichtung gemäss Anspruch 8, gekennzeichnet dadurch, dass das Verriegelungssystem aus einem Zwischenstück (47) besteht, das die beiden Stäbe (42, 43) verbindet, und auf dem eine durch einen Betätigungshebel (49) verlängerte Nocke (48) sitzt, die auf der einen Seite ein Verriegelungsprofil besitzt und auf der anderen Seite eine Entriegelungsrampe, die je nach dem verwendeten Profil das System in geschlossener oder entriegelter Stellung blockieren.

10. Vorrichtung gemäss einem der Ansprüche 8 bis 9, gekennzeichnet dadurch, dass die beiden Stäbe (42, 43) mit Rückholfedern (50) umgeben sind, die das Verriegelungsmittel darstellen.

11. Vorrichtung gemäss einem der Ansprüche 2 bis 10, gekennzeichnet dadurch, dass die Lagerflansche (12) der Rollen des «Home-Trainers» abnehmbar sind.

## Claims

1. Apparatus for supporting a bicycle in its riding position on the kind comprising a base (1) for standing on the ground, a mount means (3) of the bicycle connected to the base (1) by connection means (2) adjustable in height, wherein the base (1) comprises a rigid frame (11), defining a polygon on the ground in order to maintain the bicycle in a stable position when the rider is thereon, the connecting means (2) being adjustable between at last two positions, the one in which the bicycle wheels engage at least a part of the base (1), the other in which said wheels are removed from said base.

2. Apparatus according to claim 1, wherein the frame (11) comprises at least one girder (19) at least one of whose ends is provided with bearings (12) for supporting the axes of at least one roller (14) free or braked, permitting to said bicycle to be used as a home-trainer.

3. Apparatus according to any one of claims 1 and 2, in which the base comprises feet (16) of adjustable height.

4. Apparatus according to claim 1, wherein the connection means (2) comprise a pair of parallel pantographs, each pantograph being mounted on one of the girders (19) of frame (1), each pantograph (21) comprising hinged and superposed arms (22), forming deformable parallelograms and being hinged at their lower ends to said base (1) and at their upper ends to said mount means (3) of the bicycle.

5. Apparatus according to claim 4, wherein each pantograph is hinged by its upper end to the mount means (3) of the bicycle and by its lower end to base (1), in which one of the lower arms (23) is hinged fixedly to the base, while the other (24) is hinged on a slider (25) running back and forward along the frame (11) while and of the upper arms (28) is hinged on a sole (31) of the mount means (31), the other being hinged on a sleeve (32) sliding on said sole (31) and being provided with a blocking screw.

6. Apparatus according to claim 1, wherein the connection means (2) comprise at least one vertical column integral with the base (1), each column sliding in a tube integral with the mount means (3) on which is blocked by means of a blocking screw.

7. Apparatus according any one of the claims 1 to 6, wherein the mount means (3) comprise a cradle for receiving the pedal crank case (37) of said bicycle, said cradle being extended by an arm (34) stretching in a plane approximately parallel to the oblique member (5) of the frame of the bicycle and being provided at its upper end by a contact head (39) (adjustable to the corner angle of the frame ) designed to receive a part of the member (5) of said frame.

8. Apparatus according to claim 7, wherein the mount means (3) comprise a block (60) adjusted on arm (34), said block being pierced by two holes passing there through symmetrically to the central axis of the arm (34) in which the two rods (42, 43) slide freely, the one (42) provided with an articulated jaw (44) extended by a locking beak (46), the other (43) provided with a stirrup (54), designed to receive said beak (46), the opposite ends of said rods being provided with a locking system.

9. Apparatus according to claim 8, wherein the locking system comprise ajunction member (47) connecting both rods (42–43) on which is fixed a cam (48) extended by an operating lever (49), said cam (48) comprising on one hand a locking rise, on the other hand an unlocking ramp, so that according to the used profile the locking system ist blocked in locking position or unlocked.

10. Apparatus according to any one of claims 8 and 9, wherein return spring means (50) are mounted on each of the rods (42) and (43) so as to form the locking means.

11. Apparatus according to any one of the claims 2 to 10, wherein the bearings (12) of the rollers of home trainers are removable.

FIG.1

0 124 445

FIG.2

FIG.3

## FIG.4